Europäisches Patentamt

European Patent Office

Office européen des brevets

(11) Veröffentlichungsnummer: **0 312 075**
A1

## (12) EUROPÄISCHE PATENTANMELDUNG

(21) Anmeldenummer: 88117086.4

(22) Anmeldetag: 14.10.88

(51) Int. Cl.⁴: **B64B 1/00** , **B64B 1/40** ,
**H01L 31/04**

(30) Priorität: 15.10.87 DE 3735173

(43) Veröffentlichungstag der Anmeldung:
19.04.89 Patentblatt 89/16

(84) Benannte Vertragsstaaten:
ES GR

(71) Anmelder: Menke, Helmut, Dr.-Ing.
Waldemar-Bonsels-Weg 121 b
D-2070 Ahrensburg(DE)

(72) Erfinder: Menke, Helmut, Dr.-Ing.
Waldemar-Bonsels-Weg 121 b
D-2070 Ahrensburg(DE)

(74) Vertreter: Patentanwälte Wenzel & Kalkoff
Grubes Allee 26 Postfach 730466
D-2000 Hamburg 73(DE)

(54) Solarenergienutzung in grossen Höhen.

(57) Die Erfindung betrifft ein Verfahren zur Nutzung von Sonnenenergie in großen Höhen, insbesondere im Bereich der Tropopause, mit Hilfe mindestens einer Solarstation in Form eines zur Erdoberfläche abgespannten Systems von Auftriebskörpern (1) sowie von diesen getragenen Sonnenstrahlungsenergie-Wandlern wie solargepumpten Lasern und/oder insbesondere Solargeneratoren, speziell solchen mit fotovoltaischen Zellen, und eine zu diesen Zwecken geeignete Anlage.

Fig. 1

EP 0 312 075 A1

## Solarenergienutzung in großen Höhen

Die Erfindung betrifft ein Verfahren zur Nutzung von Sonnenenergie in großen Höhen, insbesondere im Bereich der Tropopause, mit Hilfe mindestens einer Solarstation in Form eines zur Erdoberfläche abgespannten Systems von Auftriebskörpern sowie von diesen getragenen Sonnenstrahlungsenergie-Wandlern wie solargepumpten Lasern und/oder insbesondere Solargeneratoren, speziell solchen mit fotovoltaischen Zellen, und eine zu diesen Zwecken geeignete Anlage.

Fotovoltaische Generatoren werden seit Beginn der Raumfahrt zur Stromversorgung der meisten Raumflugkörper eingesetzt. Terrestrische Anwendungen nehmen seit der ersten Ölkrise stark zu, allerdings aus Kostengründen bisher nur für Sonderanwendungen und überwiegend für kleinere Leistungen. Langfristige Projektvorschläge für größere Leistungen gehen von Solaranlagen im geostationären Orbit aus, wobei in diesen erzeugte elektrische Energie mit Hilfe von Laserstrahlen oder Mikrowellen zur Erdoberfläche übertragen werden soll.

Da terrestrische Anlagen in mittleren bis hohen geographischen Breiten wegen der ungünstigen Jahres-Sonnenscheindauer im Energiepreis für die breitere normale Anwendung noch um den Faktor 20 zu hoch liegen, besteht zur etwas besseren Nutzung der Sonnenstrahlungsenergie an bestimmten geographischen Orten der Erde bereits die Anregung (DEAS 29 01 404), Halbleiter-Solarzellen auf allen Seiten an einem in den Luftraum zu fördernden Gerät wie einem Ballon oder Drachen anzuordnen und bis zu etwa 2 km über die Hauptwolkenschichten zu bringen. Eine gewisse Sonnennachführung soll dabei mittels einer Windfahne als Stützebene erfolgen. Für etwas größere Leistungen sollen mehrere Ballons in einer in Ost-West-Richtung führenden Reihe in verhältnismäßig kleinem Abstand zueinander angeordnet werden. U.a. können sich dabei auch die Solarzellen in durchsichtigen Ballonhüllen befinden.

Die Problemstellung dieser bekannten Anregung resultiert daraus, daß die Dachflächen von Mehrfamilienhäusern für eine ausreichende Anzahl Solarzellen zu klein sind. Deshalb sollen die Reflexionsstrahlung der Erde und/oder der untersten Wolkenschichten mit ausgenutzt, morgens und abends die Solarzellen der direkten Sonnenstrahlung von unten ausgesetzt und zwei Solarzellenplatten an Seilen untereinander aufgehängt werden. U.a. ist auch die Anwendung für erdgebundene Fahrzeuge, z.B. landwirtschaftliche Maschinen oder Wasserfahrzeuge aller Art, insbesondere langsam fahrende Frachtschiffe, in Aussicht gestellt. Dabei wird immer von einem unerreichbar niedrigen Solarzellen- und Generatorpreis ausgegangen.

Eine andere bekannte Anregung (DE-OS 33 31 029) zielt insbesondere auf eine autonome Zugkraftanlage, bei der ein Luftschiff mit Strom aus Wind- oder Solargeneratoren versorgt wird, um andere Luftschiffe zu ziehen, z.B. Erdgastanker.

Endlich befaßt sich die US-PS 40 78 747 in ganz allgemeiner Weise und ausschließlich mit "orbiting solar power stations".

Von den zum Stand der Technik aufgezählten veröffentlichten Anregungen in Patentanmeldungen sind noch keine Anlagen in Betrieb bzw., soweit bekannt, in der Entwicklung. Projektstudien zu den Orbitalsystemen sind im Anfangsstadium.

Zu dem Ballon- oder Drachen-Solarkraftwerk ist zu betonen, daß die realistischen Eigenschaften und Preise von Solarzellen nur vage und nicht konsequent berücksichtigt sind. Entsprechendes gilt für geographische und meteorologische Fragen sowie bei konstruktiven Vorschlägen für eine hohe System-Lebensdauer von mindestens 30 Jahren und darüber, insbesondere auch bei nennenswerten elektrischen Leistungen bis weit über 1 MW hinaus. Beispielsweise verringert sich der Wirkungsgrad von Solarzellen bei Verwendung von intensiven Sonnenlichtkonzentratoren und/oder innerhalb durchsichtiger Ballonhüllen bis weit unter 50 % seines Normwertes bei 25° C, also bei dem heutigen Standardwert von 10 % (25° C) auf Wirkungsgradwerte bis unter 5 %.

Eine ausreichend exakte Sonnennachführung pro Tag und Jahr ist in beiden Vorschlägen - Ballon/Drachen oder Luftschiff - nicht gewährleistet, insbesondere nicht bei Verwendung von Konzentratoren. Um z.B. mit einer Windfahne Solargeneratorflächen optimal von Sonnenaufgang bis Sonnenuntergang auch gegen den Wind drehen zu können, müßte die Windfahnenfläche mehrfach größer sein als die Generatorfläche. Trotzdem leidet die Ausrichtgenauigkeit. Für Dauerbetrieb, beispielsweise bei Sturm, sind keine Möglichkeiten gegeben. Auch ist nicht erkennbar, wie der Flugverkehr bei durch Wolken beeinträchtigter Sicht auf Anlage und Abspannung durch Blinkleuchten rechtzeitig aufmerksam werden soll. Nennenswerte Selbstabschattungen der Solargeneratoren durch andere Anlagenteile sind vorhersehbar, insbesondere bei mehreren Ballons in Ost-West-Richtung. Generell wäre, um in den Bereich eines nach derzeitigen Erkenntnissen wirtschaftlichen Betriebes zu kommen, bei den bislang bekannten Vorschlägen ein Mehrfaches an Verbesserungsschritten erforderlich.

Der Erfindung liegt die Aufgabe zugrunde, trotz der gegebenen hohen Solarzellen- und Solargeneratorenkosten, während des ganzen Jahres und über längere Zeiträume hinweg eine konkurrenzfähige sowie umweltfreundlich einsetzbare Möglichkeit zur Erzeugung hoher und höchster elektrischer Leistungen und Energien unter optimaler Nutzung der Sonnenenergie von Sonnenaufgang bis Sonnenuntergang in allen, insbesondere auch in mittleren und hohen geografischen Breiten, d.h. selbst solchen mit geringer irdischer Jahressonnenscheindauer, und unabhängig von Bewölkungen, Dunstschichten und normalen Extinktionen zu schaffen und in vielen für diese Zwecke meteorologisch, topografisch und flugtechnisch ausgewählten Regionen rentable Sonnenenergienutzungen mit definierten Tages-und Jahres-Energiemengen als Ergänzung, Ersatz oder/und Konkurrenz zu anderen Energieversorgungen, insbesondere bei zunehmend kritischerem $CO_2$-Problem, zu erzielen, und zwar unter Beachtung der jeweils günstigsten Ausführungsformen im Hinblick auf die Hauptkriterien geografische Breite, Windverhältnisse nach Stärke und Richtung, Positionshöhe, Leistungshöhe und bevorzugte Energienutzungsformen, die jeweils kombinatorisch zu optimieren sind.

Diese Aufgabe wird bei dem erfindungsgemäßen Verfahren dadurch gelöst, daß ein oder mehrere Solargeneratoren durch mindestens zwei Auftriebskörper gehalten und über die das System mit der Erdoberfläche verbindenden Abspannungen von der Erdoberfläche aus im wesentlichen senkrecht zum Einfall der Sonnenstrahlung ausgerichtet werden. Bei der Anlage besteht die Lösung darin, daß das System eine Mehrzahl von ggf. modulartig aufgebauten und/oder zu Modulgruppen bzw. zu Baueinheiten zusammengefügten Solargeneratoren umfaßt, die an mindestens zwei Auftriebskörpern/Auftriebskörpergruppen eines gegenüber den Verhältnissen in großen Höhen wie in der Tropopause oder darüber widerstandsfähigen Aufbaus befestigt sind, und daß das Solargeneratoren-System über mehrere Abspannungen jeweils einzeln mit der Erdoberfläche verbunden ist, wobei mindestens ein Lagerpunkt der Abspannungen relativ zur Erdoberfläche bewegbar angeordnet ist.

Die mit der Erfindung erzielbaren Vorteile bestehen vor allem darin, daß man große Solargeneratoren-Anlagen, vorzugsweise aus "Bausteinen" in Serienfertigung zusammengesetzt und damit unter anderem auf der Erde geringere Transportprobleme verursachend, in den jeweils günstigsten Höhen zum Einsatz bringen und unter Anpassung an die jeweiligen Verhältnisse optimal nutzen kann. Vor allem lassen sich über die mindestens zwei Abspannungen die Solargeneratoren tages- und jahreszeitlich immer weitestgehend senkrecht zur Sonnenstrahlungsrichtung einstellen, wie sich gerade auch die höhere Solarkonstante oberhalb wesentlicher Teile der Erdatmosphäre infolge der Nachführbarkeit ohne nennenswerte Extinktion ganztägig und ganzjährig nutzen läßt. Durch die vollständige Tages-Sonnennachführung der Solarstation über zwei oder mehrere Auftriebskörper vom Boden aus steht ständig bei langer System-Lebensdauer etwa die halbe Jahresstundenzahl mit einer Solarkonstanten nahe derjenigen auf Erdumlauf-Bahn außerhalb der Atmosphäre zur Verfügung.

Um die Solarstation im Hinblick auf die Ausrichtbarkeit möglichst einfach handhaben zu können, ist es vorteilhaft, wenn die Solargeneratoren durch Bewegen des gesamten Systems dem Sonnenstand von der Erde aus nachgeführt werden, wobei die Nachführung vorzugsweise um eine Zenitachse erfolgt, da sich so die einfachsten und überschaubarsten Ausrichtungsverhältnisse zur Sonne ergeben. Die Energieerzeugung soll über einen größtmöglichen Zeitraum gewährleistet sein; deshalb erfolgt die Nachführung zwischen Sonnenaufgang und Sonnenuntergang, d.h. über den ganzen Tag hinweg.

Um die Arbeitstemperatur der fotovoltaischen Zellen bei den tiefen Temperaturen in größeren Höhen bis -80 ° C und darunter auch bei Windstärke null durch besondere Maßnahmen mit dem Ziel einer ausgeprägten Wirkungsgrad-Erhöhung sehr niedrig zu halten, und zwar gerade auch bei Verwendung von anlagenverbilligenden Konzentratoren, die im folgenden noch näher erörtert werden, ist in weiterer Ausbildung des erfindungsgemäßen Verfahrens vorgeschlagen, daß die Solargeneratoren um mindestens eine systemgebundene Achse rotieren. Diese kann zweckmäßig entsprechend sich ändernden Parametern des Systems nachgestellt bzw. ausgerichtet werden. Eine solche Kühlung kann besonders günstig dadurch erreicht werden, daß von den fotovoltaischen Zellen Wärmeenergie mittels Leitung, Strahlung, vor allem aber durch natürliche und/oder künstlich erzeugte Konvektion abgeführt wird. Solche künstliche Konvektion wird beispielsweise über Lüfter sowie durch die gesamte Rotation erzeugt.

Somit ist es einerseits möglich, in Regionen stetiger kalter Höhenwinde die Arbeitstemperatur der Solargeneratoren durch konstruktive Maßnahmen auch ohne Solargenerator-Rotation niedrig zu halten, während in windstillen oder windarmen Höhenregionen eine ausreichende Kühlung durch Generator-Rotation und/oder Kühlungswind-Erzeugung, insbesondere auch bei Mehr- oder Vielfach-Beaufschlagung der Solargeneratoren durch Spiegel- und/oder Konzentrator-Systeme, erzielt wird.

Zum Zwecke der Einsparung teurer fotovoltaischer Zellen und damit zur Verbilligung der Energiekosten insgesamt ist es vorteilhaft, die Sonnenstrahlung über mit den Solargeneratoren in Wirkverbindung stehende Spiegelflächen einzufangen und sie auf wenigstens einen Teil der fotovoltaischen Zellen indirekt - und zwar mindestens einfach indirekt - zu reflektieren.

Die Übertragung der erzeugten elektrischen Energie kann auf verschiedene Weise, vorteilhaft über Mikrowellen-Antennen oder Laser zur Erdoberfläche und/oder einer Höhenzwischenstation erfolgen. Dann entfallen besondere Blitzschutzmaßnahmen im unteren Höhenbereich, während sie je nach Gewitterhäufigkeit der gewählten Region bei Kabeln, wegen des jetzigen schnellen Fortschrittes auch supraleitfähigen Kabeln, erforderlich sein können. Je nach Leistungshöhe und anderen Parametern kann auch eine Umwandlung in Wechsel- oder Drehstrom hoher Spannung im Bereich der Solarstation mit entsprechender Kabelübertragung zur Erdoberfläche und/oder einer Höhenzwischenstation bzw. von dieser zur Erdoberfläche vorteilhaft sein.

Die von der Solarstation erzeugte elektrische Gleichstrom-Energie kann ggf. auch mindestens teilweise direkt zur Wasser-Elektrolyse für die Wasserstoffgewinnung verwendet werden. Weiterhin kann die Energie mittels Mikrowellen-Antennen und/oder Lasern zu Flugkörpern wie beispielsweise synchronen Energie-Relais-Satelliten, Raumstationen oder hochfliegenden Meßdrohnen übertragen werden.

Vorzugsweise wird der Endüberdruck-Zustand der Auftriebsmittel in der Höhe des Einsatzortes auf die dort herrschenden Tragfähigkeitsverhältnisse eingeregelt. Das heißt auch, daß die Sonneneinstrahlung tagsüber eine gute Aufheizung des Traggases zwecks Traggasmengen- und -kosteneinsparung bewirkt, während nachts eine nur geringe Abkühlung des Traggases stattfindet.

Um bei stärkerer Abkühlung des Traggases, insbesondere nachts, einem nicht tolerierbaren Tragfähigkeitsverlust vorzubeugen, kann das Traggas in dem oder den Auftriebskörpern mittels Windgeneratoren in der Solarstation erzeugte Energie nacherwärmt werden. Ebenso gut kann diese Nacherwärmung aber auch von der Erdoberfläche her bewirkt werden.

Traggasverluste im Laufe der angestrebten langen Lebensdauer der Anlagen können durch Zusatzmittel zur Selbstheilung kleinerer undichter Stellen minimiert werden. Selbstverständlich ist aber auch ein Ausgleich durch Gasnachführung möglich und realisierbar. In Windzonen kann nachts eine Höhenwind-Drachenstellung zusätzlich die auftriebsmindernde Gasabkühlung überbrükken, wobei auch Höhenleitwerke Tag und Nacht zur Feinregulierung der Auftriebskräfte beitragen können.

In sonnenreichen Regionen kann z.B. eine Kombination von Höhensolarstationen mit zusätzlichen Spiegeln zur Erhöhung der Solarkonstanten auf zugeordneten fotovoltaischen und/oder thermischen und/oder thermisch-elektrischen Erdoberflächen-Solaranlagen sehr vorteilhaft sein, da von Sonnenaufgang bis -untergang nur einmal die Luftmasse 1 zu durchdringen ist und die normale Extinktion morgens und abends ebenfalls weitgehend entfällt.

Endlich kann der Solarstation von mindestens einem Spiegel- oder Laser-Satelliten Solarenergie zugeführt werden, was einen 24-Stundenbetrieb sowie ein Mehrfaches der Solarkonstanten und damit eine weitere Steigerung der Energieausbeute der Solarstationen in allen Breitengraden ermöglicht. Dies kann bis über das Fünfzigfache an Jahresausbeute gegenüber den heute angeregten Dahlberg-Solarfarmen (s. VDI-Nachrichten 1980, 6 Folgen), die ohnehin nur in den wenigen bevorzugten Sonnengebieten der Erde möglich bzw. sinnvoll sind, hinausgehen. In mittleren oder hohen Breiten ist der relative Energiefaktor noch höher.

Ein wesentliches Ziel beim konstruktiv-apparativen Aufbau von Anlagen zur Lösung der der Erfindung zugrunde liegenden Probleme ist es, mit irdischen Mitteln bei optimalem Wirkungsgrad der Anlage die Solarzellen-Arbeitstemperatur trotz Vielfachkonzentration niedrig zu halten und teils auch Abwärme zu nutzen. So werden für diese Zielsetzung beispielsweise in der UdSSR Anlagen forciert, die bisher ohne Zusatzbeaufschlagung von auftriebsgetragenen Hochspiegeln arbeiten.

In besonders einfacher, bevorzugter und damit prinzipieller Ausbildung eines Solargenerator-Systems mit mindestens zwei Auftriebskörpern bzw. Auftriebskörpergruppen ist vorgesehen, daß die Lagerpunkte der Abspannungen gemeinsam bewegbar sind. Dabei können zweckmäßigerweise die Lagerpunkte der Abspannungen an Trägern sitzen und entsprechend dem Sonnenlauf mindestens teilweise bewegbar sein. So ist es wahlweise möglich, daß je eine Abspannung eine etwa kreisbogenförmige Bewegung des einen Lagerpunktes der Abspannung auf der Erdoberfläche um den anderen Lagerpunkt und damit die vollständige, automatische Tagessonnennachführung bewirkt oder beide Lagerpunkte gemeinsam gegenüberliegend auf einer Kreisbogenschiene zur Minimierung des Schienenaufwandes gefahren werden können. Im letztgenannten Fall ist es vorteilhaft, wenn die Träger ggf. in Anpassung an bestimmte Windverhältnisse auf kreis- oder ellipsenförmigen, bodenverankerten Schienen gelagert sind und Seilwinden oder Seilhalterungen umfassen, die kontinuierlich oder in Schritten - vorzugsweise automatisch - entlang der Schiene bewegbar sind. Über Wasseroberflächen, wie Flüssen, Seen oder Offshore-Gebieten bieten sich auch geeignete Schwimmkörper an, evtl. mit weitem Spreizwinkel. An Land kann auch ein Fahrzeug, z.B. bei Katastrophen-Einsatz die Sonnen-Synchrondrehung bewirken.

Zur Erzielung hoher Leistungen bei möglichst geringem mechanischem Aufwand an der Erdoberfläche ist in vorteilhafter Weiterbildung der erfindungsgemäßen Anlage vorgesehen, daß diese eine größere Zahl von Solarstationen mit je mindestens zwei Abspannungen umfaßt und auf einem gemeinsamen, vorzugsweise in Nord-Süd-Richtung ausgerichteten Schienensystem gelagert ist. Dabei können eine Abspannung ortsfest verankert und weitere Abspannungen je nach Sonnenstand an einer oder mehreren Parallelschienen zu den festen Abspannungspunkten automatisch nachführbar sein, insbesondere zwecks Tagessonnennachführung bewegt werden, wobei dieses bei mehr als zwei Abspannungen je Anlage auf einer entsprechenden Anzahl Parallel-Nord-Süd-Schienen erfolgt. So kann man in vernünftiger Weise eine Mehrzahl Solarstationen zu Farmanlagen vereinigen.

Im Falle eines solchen Großanlagen-Aufbaus wird das System vorteilhaft eine Mehrzahl von zu Baueinheiten zusammengefügten Solargeneratoren umfassen, die an mindestens zwei Auftriebskörpern/Auftriebskörpergruppen eines gegenüber den Verhältnissen in der Tropopause oder darüber widerstandsfähigen Aufbaus befestigt sind, wobei die Solargeneratoren Stellglieder aufweisen werden, die zur täglichen Sonnennachrichtung an einem "Seitenleitwerk" - winddrehbar - im Bereich von Tragkörper und Solargenerator zur Feinnachführung angeordnet sind. Eine solche Feinnachführung oder -ausrichtung kann durch dem Fachmann bekannte Ein- oder Zweiachsen-Stellglieder, die den Solargeneratoren bzw. -Modulen zugeordnet sind, erfolgen, wobei solche "Windseitenruder" je nach Höhenwindverhältnissen und er-forderlichen Genauigkeiten insbesondere bezüglich der noch zu erläuternden Spiegel- und/oder Konzentratoranwendung mitwirken.

Vorzugsweise sind die Abspannungen in Form hochfester Seile geringen spezifischen Gewichtes vorgesehen. Hochfeste Seile geringen spezifischen Gewichtes mit heute üblichen Reißlängen bis über 50 km Länge tragen zur gewünschten Leichtbauweise und damit zur Auftriebsvolumen-Minimierung bei. Hochpolymere Seile übertreffen hochfeste Stahldrähte um mehr als den Faktor 3 und erreichen über 5 000 N/mm²

Um im Bedarfsfall teuerste Anlagenteile - wie insbesondere die Solargeneratoren - unzerstört in Sicherheit bringen und damit Versicherungsprämien minimieren zu können, kann bevorzugt mindestens ein Anlagenteil der Solarstation über eine zusätzlich zu den Abspannungen vorgesehene Notseilanordnung und/oder ein Fallschirmsystem in Einzelverbindung zur Erdoberfläche stehen. Zur weiteren Sicherheitserhöhung können die mindestens zwei Auftriebskörper einer Solarstation aus Auftriebskörpergruppen mit schnell aufblasbaren Reservehüllen bestehen.

In diesem Zusammenhang seien denkbare vorteilhafte Schutzmaßnahmen speziell im Hinblick auf Schäden durch Witterung oder andere äußere Einflüsse, erwähnt. So können vor allem größere Solarstationen außerhalb langfristig gewitterfreier Zonen durch entsprechend optimierte Blitzschutzmaßnahmen und/oder Blitzschutzsysteme vor Störungen bewahrt werden, während insbesondere kleine Solarstationen oder Teile von größeren Solarstationen rechtzeitig vor Unwetter und/oder in jeder Nacht in Schutzzonen an der Erdoberfläche herabgefahren werden können. Aber auch eine Zwischen- oder Überhöhe bezüglich Normalbetrieb kann zumindest zeitweilig vorteilhaft sein, wie in Zeiten häufigerer Gewitter. Mikromteoritengefahren sind in solchen Höhen praktisch noch nicht zu erwarten. Aber die mögliche Ozonaggressivität und/oder das Paschen-Gesetz können dann besonders zu beachten sein.

Je nach Anlagengröße und Blitzarmut einer geografischen Region kann bei Wettersondersituationen in der Tropo sphäre, vor allem im unteren Höhenbereich, ein Höherfahren der Solarstation nach Kabelentkupplung am Erdboden, und zwar sowohl von Energiekabel als auch Überwachungs-, Meß-, Steuer- und Regelkabel besondere Vorteile bieten.

Das gilt auch bei automatischer Kabelentkupplung an der Solarstation oder an einer Zwischenhöhenstation, beispielsweise mit hohldiskusförmigen Zwischenauftriebskörpern, wegen der Horizontal-Windgeschwindigkeit. Das oder die Kabel werden dann für eine eng begrenzte wetterbedingte Zeit und/oder nachts, u.a. auch wegen Traggasabkühlung, zur Erdoberfläche herabgelassen.

Bei einer weiteren Variante für Sonderorte beispielsweise auf ausgewählten hohen Bergen mit witterungsmäßig besonders ungünstigen Niedrigzonen der dortigen Tropospäre kann diese Zone durch besonders langlebige hohe Turmbauten - evtl. mit Mehrfachnutzungsfunktion - überbrückt werden. Mehrfach abgespannte Rohrtürme von vielen hundert Metern Höhe sind bereits heute Stand der Technik.

Bezüglich des Flugverkehrs bieten sich viele Gebiete an, die bereits Flugverbot haben oder solches zu vereinbaren ist. Dennoch können und/oder sollten Flugwarn-Anlagen funktechnisch und/oder optisch, mit Bodenradarüberwachung für höchste Sicherheit sorgen.

Zwecks maßgeblicher Erhöhung der Gesamtstabilität und Zuverlässigkeit speziell bei großen Anlagen ist es vorteilhaft, wenn die Auftriebskörper oder Auftriebskörpergruppen (Auftriebscluster) mehretagig, d.h. mindestens zweietagig angeordnet sind, denn bekanntlich nimmt die Tragfähigkeit pro Volumeneinheit mit abnehmender Höhe entsprechend der Luftdichte nennenswert zu.

Zur weiteren Redundanzerhöhung kann jeder einzelne Auftriebskörper ggf. vielfach kammerunterteilt ausgeführt werden, was nicht zu nennenswerter Gewichtserhöhung führt, da heute verfügbare Folien in Ein- bzw. Mehrschichtausführung minimale spezifische Gewichte haben. Flächengewichte unter 60 g/ms$^2$ sind erreichbar.

Zur möglichst problemfreien Handhabung gerade auch an Einsatzorten mit ungünstigen Höhenwind- und Wetterverhältnissen sollten die Auftriebskörper eine Form günstigen Luftwiderstandsbeiwerts haben und als Hohlzylinder, Hohlring, Hohldiskus, Hohlscheibe, Hohlspeicherrad od. dgl. ausgebildet sein. Solche günstigen Luftwiderstandsbeiwerte können natürlich auch durch entsprechende Ausbildung, soweit erforderlich und zweckmäßig, für die Abspannseile und/oder Kabel, zumindest in Teilhöhenbereichen, vorgesehen werden.

Vorzugsweise können separate Auftriebskörper zum Tragen von Energie-Umwandlungs- und/oder -Transport-Einrichtungen in der Nähe der Solarstation vorgesehen sein, wodurch man in die Lage versetzt wird, in konstruktiv und betriebstechnisch zweckmäßiger Weise den erzeugten Gleichstrom in der Höhe direkt in Wechsel- und/oder Drehstrom hoher Spannung umzuwandeln bzw. über dort angeordnete Mikrowellenantennen und/oder Lasereinrichtungen nach unten oder oben zu übertragen, beispielsweise zu synchronen Energie-Relais-Satelliten, die jetzt in den USA, Japan und der UdSSR forciert werden.

Vorteilhafte Sonderausführungen für größere Leistungen mit Schienensystemen und Anlagenfarmen, insbesondere auch in windstillen oder windschwachen Höhenregionen, sind Vorrichtungen, bei denen mindestens ein Teil der Auftriebskörper zu einem scheibenähnlichen Gebilde mit definierter Hauptachse gebündelt und/oder verseilt sind, die auf die Sonne gerichtet und dieser von Sonnenaufgang bis Sonnenuntergang nachführbar sind. Auch eine andere Form wie ein Hohldiskus kann hier vorteilhaft sein. Die Module oder Modulgruppen der vorzugsweise mit Spiegeln oder Konzentratoren ausgerüsteten Solargeneratoren sind dabei vorzugsweise auf einer Seite des scheibenförmigen Gebildes angeordnet. Hierbei ist es zweckmäßig, wenn das scheibenförmige Gebilde mit Antriebsmitteln zur Rotation um die Hauptachse verbunden ist, weil sich dadurch eine besonders gute Konvektionskühlung der Solargeneratoren bei zusätzlicher Gesamtstabilisierung des Systems infolge der Rotation ergibt. Es kann auch eine zusätzliche Zwangskühlungsbelüftung mit rotierender ggf. gegenrotierender Lüftungsscheibenanordnung erfolgen.

Besonders vorteilhaft auch für größte Anlagen können Solarstationen sein, bei denen mindestens ein Teil der Auftriebskörper aus einem oder mehreren auftriebsgasgefüllten Hohlringkörpern mit definierter Hauptachse (Torus) besteht, wobei die davon getragenen Solargeneratoren außen auf dem Umfang der Hohlringkörperanordnung befestigt sind. Dabei kann die Hauptachse des Torus in Nord-Süd-Richtung während aller Jahreszeiten allenfalls zum Winddriftausgleich geringfügig bewegbar und senkrecht zur Ebene des Tagessonnenlaufes jahreszeitlich gemäß Mittag-Zenitwinkel nachführbar sein. Im Hohlringinneren des Torus kann eine als Sammelspiegel ausgebildete Teilungsfolie und/oder sonstwie ausgebildete, geeignete Teilungsfläche als Konzentrator mittlerer bis höherer Konzentration zur Beaufschlagung der außen getragenen Solargeneratoren durch optimale spektraltransparente Folienteile der äußeren Torushülle hindurch, angeordnet sein, indem vorzugsweise die außen am Umfang des Torus befindlichen Solargeneratoren über einen spektraltransparent ausgebildeten Teil der äußeren Torushülle hindurch mit einem Mehr- bis Vielfachen der Solarkonstanten beaufschlagbar sind. Auch andere Formen wie Hohldiskus odr Hohlspeicherrad können hier vorteilhaft sein. Diese Ausführungsformen wie Torus etc., eignen sich auch besonders über Wasseroberflächen.

Der Hohlringkörper kann bevorzugt um seine Zentralachse rotierbar sein. Dadurch erfolgt die Solargeneratorenkühlung mittels vorzugsweise radial nach außen gerichteten Wärmeableitvorrichtungen besonders gut, auch bei Windstärke null. Bei Anordnung einer Mehrzahl von Hohlringen werden diese zweckmäßigerweise gemeinsam um die Zentralachse angeordnet und/oder rotierbar, wobei es auch möglich ist, daß die Hohlkörper mindestens teilweise gegenläufig rotierbar sind. Es kann natürlich auch eine zusätzliche oder alleinige Zwangskühlung durch rotierende Lüfter beispielsweise zwischen den die Solargeneratoren tragenden Hohlringkörpern bewirkt werden, um bei mittleren und höheren Konzentrationsfaktoren tiefe Arbeitstemperaturen beizubehalten. Je nach Windverhältnissen kann es dabei strömungstechnisch günstig sein, daß in Weiterbildung der Erfindung die Abmessungen der einzelnen Hohlringe unterschiedlich vorgesehen sind. Auch mehr- oder vieleckige Formen können günstig sein.

Nach einer anderen Variante der Erfindung kann mindestens ein Teil der Auftriebskörper aus einem oder mehreren Hohlzylindern bestehen, die in oder um eine Hauptachsrichtung ausgerichtet sind und die oben beschriebenen Hohlringsysteme in größerer Stückzahl, aber mit kleinerem Querschnitt, mit Spiegelteilungsfolien und Solargeneratormodulen tragen. Dadurch erreicht man noch höhere Konzentrationen, bessere Kühlungsbedingungen und einen größeren Umfangsbereich, der bei der Rotation jeweils sonnenaktiv ist.

Auf diesem Wege ist auch durch eine dem Fachmann bekannte Verschaltung der Module aus dem gewonnenen Gleichstrom direkt Wechseloder Drehstrom hoher Spannung und auch höherer Frequenz zu erzeugen.

Bei den beschriebenen Torusanordnungen können die jeweiligen Hauptachsen für die Abspannungen jeweils ein oder mehrere sich senkrecht zur Hauptachse erstreckende, bevorzugt in Leichtbauweise ausgebildete Arme aufweisen, die u.a. zwischen jeweils einer Anzahl von Hohlringen drehgelagert sind und über die die Bodenfesselung und Nachführung erfolgt. Dabei können im Hinblick auf die Manövrierbarkeit und die Kräfteverhältnisse die Torus-und/oder Hohlzylinderkörper in bezug auf den oder die Arme im wesentlichen gleichmäßig längs der Hauptachse verteilt und die Bodenstationsfesselungen etwa an den Enden der Arme vorgesehen sein.

Bei einigen Konstruktionen können ebene Spiegelflächen ein-, zwei- oder vierseitig um die Solargeneratoren oder die einzelnen Module davon angeordnet werden, beispielsweise als Quadrat- oder Sechseck-Kegelstumpf. Dadurch kann der Konzentrationsfaktor fast bis zum Faktor 5 preissenkend erhöht werden.

Bei Anlagen, vor allem in hohen Breiten, mit ein- oder zweiseitigen ebenen Spiegelflächen können die Spiegelflächen über die jeweilige Länge und/oder Breite der Solargeneratoren oder ihrer Module hinausgehen. Dadurch ist die erforderliche Sonnenausrichtgenauigkeit zumindest in einer Achse wesentlich zu mindern.

Spektraloptmierte hochtransparente und/oder thermisch optimierte Auftriebskörper-Hüllenmaterialien, ggf. teils nur in Bereichsabschnitten der Oberfläche vorgesehen, tragen zur Optimierung des Wärmehaushaltes der einzelnen Tragkörper bei. Die Erwärmung des Traggases am Tag kann die notwendige Traggasmenge kostengünstig um einen Faktor bis zu zwei und darüber verringern, und die thermischen Hüllenmaterial-Eigenschaften können die Temperaturabsenkung des Traggases nachts minimieren. Das gilt für alle Tragkörper, also auch solche, die als Zusatztragkörper zu bezeichnen sind, wie bei einigen der später aufgeführten Ausführungsbeispiele gezeigt wird.

Die Spiegelflächen zur Sonnenstrahlunskonzentration sollen sich bei diesen Solarstationen bevorzugt im Innern der Auftriebskörper-Hüllen befinden. Dadurch läßt sich die Lebensdauer, optische Qualität und Sauberkeit der Spiegeloberflächen wesentlich steigern, beispielsweise auch im Vergleich zu irdischen Anlagen mit erheblichem Reinigungsaufwand. Bei einer Gruppe von Ausführungsformen können die Spiegelflächen direkt auf Hüllenteile im Innern der Auftriebskörperhüllen aufgebracht werden. Das trägt wesentlich zur Material- und Gewichtsersparnis der Anlagen bei.

Eine Sonderform von Solargenerator/Spiegelsystemen kann für einige Einsatzzwecke zusätzliche Vorteile bringen. Dies ist ein sogenanntes "Jalousie-System", wie es für bestimmte Raumflug-Missionen vorgeschlagen und raumfahrtgemäß entworfen wird. Auf der Rückseite der einzelnen Jalousie-Blätter befinden sich relativ schmale Solarzellen-Streifen, auf die die verspiegelten Vorderseiten der Jalousieblätter das Sonnenlicht bündeln. Abgewandelt bezüglich der wesentlich anderen Bedingungen der auftriebsgetragenen Solarstationen gegenüber den Raumfahrt-Bedingungen können solche adaptierten Jalousie-Systeme für einige Anwendungen vorteilhaft sein. Beispielsweise bietet die volumenmäßig enge Zusammenlegbarkeit günstige Transportmöglichkeiten für den Katastrophen-Einsatz. Das gilt auch für andere Raumfahrtausführungen mit verbilligter Serienfertigung für die hier wesentlich geringeren Anforderungen.

Auch dabei ist, wie hier allgemein, die möglichst niedrige Arbeitstemperatur der Solargeneratoren und/oder Solarzellen, einzeln oder in Gruppen, mittels Wärmeleiteinrichtungen von großer Bedeutung.

Bei vielen Ausführungsformen sind freie Horizontalflächen mit Kaminwirkung in den Solargeneratoren zur optimierten Konvektionskühlung der durch Sonnenbestrahlung und/oder Konzentratoren sich erwärmenden Solarzellen vorteilhaft zur Erhöhung ihres Wirkungsgrades.

Entsprechendes gilt für freie Vertikalflächen mit optimierter Düsenform in den Solargeneratoren zur optimalen Kaltwindkühlung ohne oder auch mit Rotationsbewegung.

Ein weiterer Schritt in dieselbe Richtung besteht darin, Spezial-Kühlrippen und/oder Wärmetauscher gegebenenfalls unter Einsatz von Wärmerohren an den einzelnen Zellen Modulen oder Modulgruppen anzubringen.

Insbesondere bei höher konzentrierenden Generator-Systemen können Massenverlagerungen in der Solarstation mittels massenverlagerbaren Tariermassen beispielsweise längs der Zentralachse zur weiteren Verbesserung der Sonnenausrichtgenauigkeit und damit zur stetigen Effizienzerhöhung beitragen. Solche Tariermassen können ggf. durch ein oder mehrere Kreiselsysteme, z.B. mit Laserkreiseln und/oder mit Drallrädern, regelbar sein.

Die Übertragung der gewonnenen elektrischen Energie in einer Solarstation oder Farm mittels Mikrowellen und/oder Laser nach unten und/oder oben kann ein Energie-Übertragungskabel von der Station zur Erdoberfläche erübrigen, was auch in Gewitterzonen vorteilhaft sein kann. Die Energieübertragung nach oben beispielsweise zu erdsynchronen Energie-Relais-Satelliten für die eventuelle weltweite Energieverteilung gemäß UdSSR-Planungen spricht für sich.

In Sonderfällen und je nach Entwicklungsfortschritt können auch Solarstationen mit zusätzlich einem oder mehrere Sonnenspiegel-Kraftwerken nach dem Brayton-, Rankine-und/oder Sterling-System in Betracht kommen. Das kann beispielsweise den Vorteil haben, auch Wechsel- oder Drehstromenergie bestimmter Spannungen und Frequenzen in der Solarstation zur Verfügung zu haben und/oder über entsprechende Kabel zur Erdoberfläche zu übertragen.

Ebenfalls können, insbesondere für Sonderanwendungen, die Solarstationen, ggf. zusätzlich, mit einem oder mehreren Energiespeichern, wie elektrochemischen und/oder induktiven, vorzugsweise solchen auf Supraleitfähigkeitsbasis und/oder mindestens einen Schwungradspeicher ausgerüstet sein, um Leistungs- und/oder Energie-Impulse zur Verfügung zu haben. Je nach Entwicklungsstand und -fortschritt der einzelnen Energieübertragungswege dieses Programms und ihrer kommerziellen Konkurrenz-Situation können zum Beispiel auf diesem Wege thermisch-elektrische Erdoberflächen-Kraftwerks-Anlagen mit IR-Laser-Impulsen betrieben werden. Solche zusätzlichen Energiespeicher können auch separat in nahen Auftriebssystemen angeordnet sein.

Ein weiterer Sonderfall besteht darin, vor Einsatz der Raumfahrtmöglichkeiten für die Nachtmitnutzung der Anlagen beispielsweise bei den rotierenden Torus-Typen in Gebieten hoher Jahressonnen-Stundenzahlen (Dahlberg-Gebiete) die Effizienz der Anlagen durch Sonnenbestrahlung des sonst nicht aktiven Teiles des Torusumfangs mittels ausrichtbaren Erdoberflächen-Sonnenspiegeln analog den Solar-Turmanlagen (wie in Spanien) weiter zu erhöhen, um die Gesamtrentabilität zu verbessern und konkurrenzfähige Strompreise zu erzielen. Es können aber ebenso gut auftriebsgetragene Spiegel der Anlage zugeordnet sein, um die Solarstation mindestens teilweise, also zusätzlich oder ausschließlich mit Sonnenstrahlungs- und/oder Lichtenergie zu beaufschlagen.

Eine weitere Sonderanwendung betrifft die Beaufschlagung einer Solarstation mit bodengestützten und/oder auftriebsgetragenen Lasern, die je nach Frequenz ohne wesentliche Solargenerator-Erwärmung sowohl bei Impuls-als auch bei Dauerstichfunktionen den Solarzellen-Wirkungsgrad bis über 80 % nutzen. Insbesondere die Impulsverfügbarkeit kann auch verschiedene Anwendungen beispielsweise für die Raumfahrt haben, wie zur Energieversorgung von Raumstationen in niedrigem Erdorbit zur Abbremsvermeidung durch große Solargeneratorflächen.

Vor allem in windstillen Höhenregionen können spezielle Antriebe wie elektrische Luftschrauben-Antriebe, Kaltgasdüsen-Antriebe oder elektrische Antriebe sowie Erdmagnetfeld-Ausrichtungen die Stationspositionierung und/oder hochgenaue Sonnenausrichtung für die optimale Konzentrator-Nutzung mit übernehmen, bei kabelloser Energieübertragung zumindest zeitweilig auch ausschließlich. Sonnensensoren können die jeweilige Bezugsrichtung vorgeben.

Um insbesondere bei großen Anlagen und Farmen höchstmögliche Betriebssicherheit zu gewährleisten, bieten sich viele zu optimierende Möglichkeiten an. Besondere Komponenten werden entsprechend überdimensioniert und/oder ein- bis mehrfach redundant ausgeführt. Vor allem die Tragkörper und/oder Zusatztragkörper können aus Doppel-oder Mehrschichtfolien bestehen, teils mit Luft- und/oder Leichtschaumfüllung und/oder Feststoffschichten, teils zur Formstabilität, auch bei nachlassendem Innendruck und/oder bei Temperaturschwankungen, unterstützt durch eingearbeitete Teile aus "Memory-Metal" wie beispielsweise bei bestimmten Spiegelflächen. Dadurch können ungünstige Einflüsse weiter Temperaturbereiche auf die projektierte Spiegelfunktion ausgeschaltet werden..

Stoß- und Schwingungsvorgänge durch Sturm und Böen in der Troposphäre durch Dämpfungsmaßnahmen, beispielsweise Abspannseil-Querverbinder, Dämpfungsmittel längs der Abspannseile, horizontale hohldiskusförmige Zwischenauftriebskörper und/oder auftriebsmitwirkende Hohlspeichenräder zwischen den Abspannungen minimiert werden.

Selbstverständlich sollten die Solarstationen, vor allem bei größeren Anlagen und Farmen, und alle ihre wichtigen in Betracht kommenden Bauteile und Baugruppen bezüglich der verschiedenen notwendigen Handhabungen bei Aufbau, Kontrolle, Wartung, Reparatur und evtl. Abbau bzw. Ortsveränderung optimal gestaltet werden. Dadurch können je nach dazu geeigneter Höhenlage bemannte oder unbemannte Flugkörper und/oder Auftriebsanlagen mitwirken.

Endlich ist zu betonen, daß die Zahl und Größe der Vorteile der beschriebenen auftriebsgetragenen Solarstationen und Farm-Anlagen im Vergleich zu terrestrischen und derzeit auch raumfahrttechnischen Solaranlagen für terrestrische Zwecke nach heutigen Zeit- und Kostengesichtspunkten so hoch ist, daß sie als ein wichtiger konkurrenzfähiger Zukunftsanteil des Welt-Energie-Mixsystems anzusehen sind.

Dies kann noch wichtiger werden, wenn von den fünf den heutigen Energieversorgungen und längerfristigen Planungen anhaftenden Problembereichen, nämlich weiteren Ölpreisschocks, Vorratsgrenzen von Erdöl und Erdgas, $CO_2$-Problematik bzw. Treibhauseffekt, Kernspaltungsener gie-Akzeptanz und Unsicherheit bzw. Ausführbarkeit von rentablen Kernfusions-Kraftwerken, einer oder sogar mehrere zur Auswirkung kommen.

Zur technischen Durchführbarkeit, Risiko-Abschätzung und Akzeptanzfrage sei abschließend darauf hingewiesen, daß insbesondere die statischen oder relativ ruhigen Luftbereiche mit jährlichen oder halbjährlichen konstanten Windverhältnissen nach Stärke und Richtung in den Zonen um die Tropopause relativ geringe Anforderungen stellen. Speziell für kleinere Solarstationen gibt es weltweit in fast allen Breitengradbereichen eine hohe Zahl sofortiger rentabler Einsätze.

Weitere Vorteile und Ausführungsformen oder -möglichkeiten der Erfindung gehen aus der folgenden Beschreibung der in der schematischen Zeichnung dargestellten Ausführungsbeispiele hervor. Es zeigt

Fig. 1 die Frontansicht einer ersten Ausführungsform einer Solarstation, dem Tagessonnenlauf synchron nachgeführt mittels einer Kreisbogenschiene,

Fig. 2 eine geschnittene Seitenansicht einer zweiten Ausführungsform,

Fig. 3 eine Teil-Draufsicht zu Fig. 2,

Fig. 4 einen Grundriß eines Schienensystems für Tagessonnennachführung vieler als Solarfarm angeordneter Einzelsolarstationen,

Fig. 5 einen Querschnitt einer Solarstation als Scheibenanordnung aus zylindrischen Hohlringtragkörpern,

Fig. 6 einen Querschnitt durch einen Torus der Fig. 5 mit niedrig konzentrierendem Spiegelsystem,

Fig. 7 einen Querschnitt durch einen Torus aus Fig. 5 mit mittelstarkem Konzentrator und

Fig. 8 einen Querschnitt einer Torus-Anordnung als Solarstation mit höherer elekrischer Leistung bei quasi während eines ganzen Jahres fester Nord-Süd-Ausrichtung.

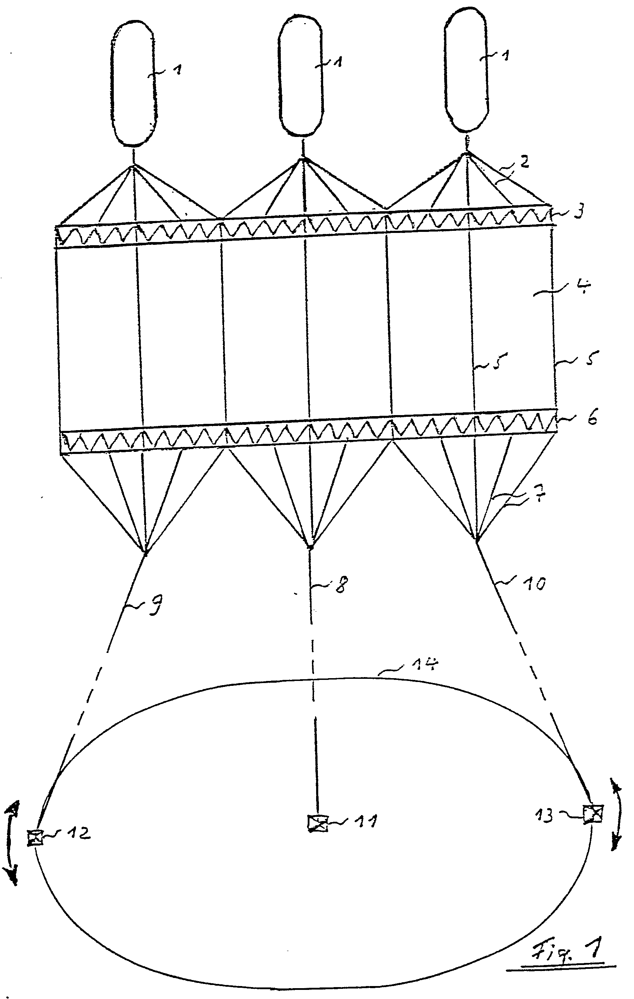

Bei der Ausführungsform der Fig. 1 tragen Auftriebskörper 1, die hier als drei einzelne hohlzylindrische Kunststoff-Folienballons mit Heliumfüllung als Traggas dargestellt sind, über Kunststoff-Seilverspannungen 2 eine Traverse 3, beispielsweise als Fachwerkträger in Leichtbauausführung aus Leichtmetall oder Kunststoff wie GFK, mit Diagonalverstrebungen zwischen den Ober- und Untergurten. Daran hängen sechs Solargeneratoren 4 in optimierten Reihen- und Parallelschaltung der einzelner photovoltaischer Zellen oder Solarzellenmodule in Leichtrahmengestellen 5, die unten wiederum durch eine Traverse 6 zusammengehalten sind. Über Seilverspannungen 7 ist die gesamte Solarstation mit Hilfe von Halteseilen 8, 9 und 10 zur Erdoberfläche abgespannt, wobei hier das Halteseil 8 über eine Seilwinde 11 mittels entsprechender Zuganker direkt bodenverankert ist und die Halteseile 9 und 10 ihnen zugeordnete Seilwinden 12 und 13 geführt werden.

Eine bodenverankerte kreis- oder kreisbogenförmige Schiene 14 mit zweckentsprechendem Spezialprofil dient zum tageszeitlichen, vorzugsweise automatischen Nachführen der Solarstation senkrecht zur Sonnenhimmelsrichtung vom Sonnenaufgang bis zum Sonnenuntergang mittels synchronem Bewegen der Seilwinden 12 und 13 entlang der Schiene 14. Die Fesselverseilung 8 kann auch gleichzeitig das Energieübertragungskabel tragen, beispielsweise als Gleichstromkabel optimaler Hochspannung, sofern das Energiekabel bei größeren Anlagen und elektrischen Leistungen nicht mittels eines räumlich getrennten Auftriebssystems in unmittelbarer Nähe der drehbaren Solarstation nach oben geführt wird.

In höheren geografischen Breiten kann diese einachsige Tagessonnennachführung, insbesondere bei Verwendung von niedrig konzentrierenden Spiegelsystemen zur Anlagenkostenminderung gemäß dem in Fig. 6 gezeigten Prinzip, d.h. zur Einsparung von Solarzellenflächen bei etwa gleicher elektrischer Leistung und/oder insbesondere gleicher Jahresenergiemenge der Solarstation, bereits ausreichend konkurrenzfähig für entsprechend ausgewählte Anwendungen sein, wie beispielsweise in Gebirgsregionen oder zur Inselversorgung außerhalb von Flugrouten, und zwar mit konstanten zuverlässigen Jahresenergiemengen.

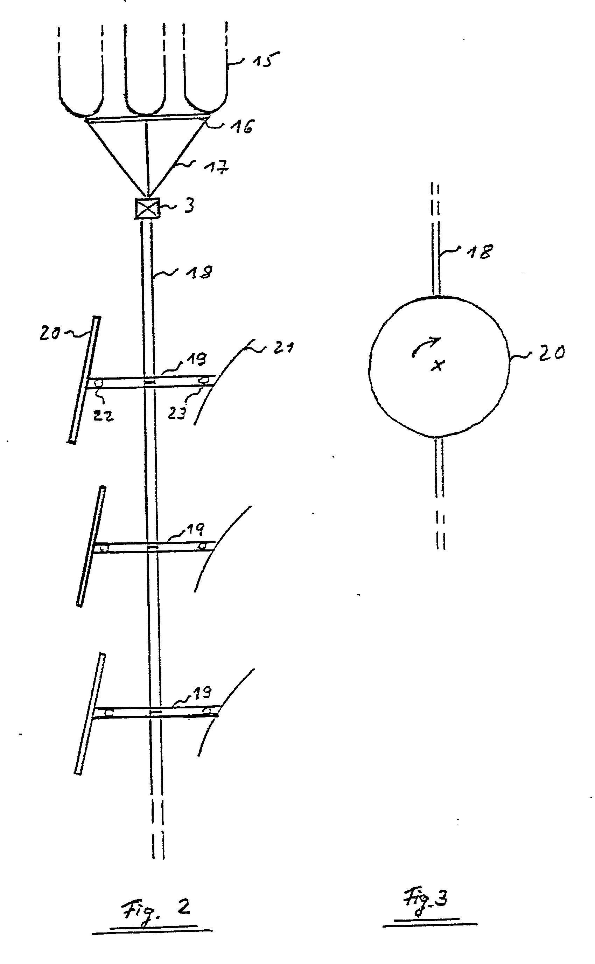

In der Ausführungsform der Fig. 2 ist die Tagessonnennachführung auch in der zweiten Achse dargestellt. Aus Redundanzgründen besteht in diesem Beispiel jeder der drei in Fig. 1 gezeigten Auftriebskörper 1 aus je drei Einzeitragkörpern 15, die über eine Traverse 16 auf Abstand gehalten sind. Die Traverse 3 wird wiederum durch Seilverspannungen 17 getragen. An der Traverse 3 hängt hier eine größere Zahl von Stab- oder Gittermastanordnungen 18 in Leichtmetall- oder Kunststoffausführung. Diese tragen Querarme 19 mit Solargeneratoren 20 und Mikrowellen-Antennen oder auch Lasern 21. Über drehbare Gelenke 22 und 23 erfolgt eine weitgehend genaue Sonnenausrichtung der Solargeneratoren 20, insbesondere bei Spiegelanwendungen mit mittlerer und höherer Konzentration, und zur Nachführung der Mikrowellen-Antennen relativ zu Erdempfangs-Antennen.

Der vertikale Abstand der Querträger 19 richtet sich u.a. zur Vermeidung der gegenseitigen Abschattung der Solar-Generatoren nach der geografischen Breite des Betriebsortes. Die Mikrowellenantennen oder Laser 21 können auch für eine Gesamtstation zusammengefaßt werden und/oder als separate nahe eigene Auftriebsstation betrieben werden.

Dabei kann die gewonnene elektrische Energie auch zu Flug-oder Raumflugkörpern wie beispielsweise kontinuierlich einsetzbaren $CO_2$-Meßdrohnen oder zu Energie-Relais-Satelliten übertragen werden. Das gilt insbesondere auch für Großanlagen und/oder Solarstationsfarmen beispielsweise in entlegeneren Gebieten.

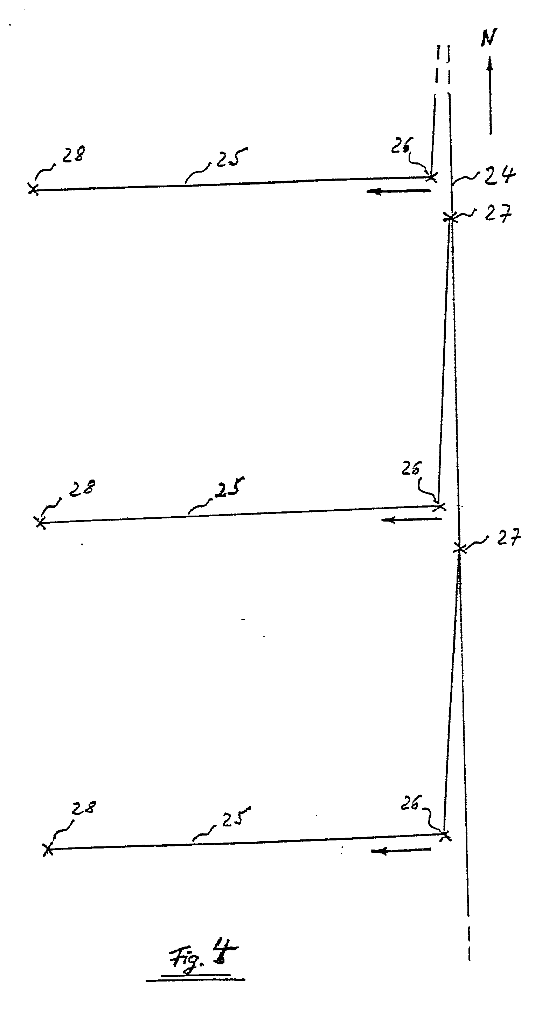

In Fig. 3 ist die gegenüber Fig. 2 um 90° gedrehte Ansicht eines Solargenerators 20 in Kreisflächenform mit dahinter befindlicher tragender Stab- und Gittermast-Anordnung 18 dargestellt. An dem hier nicht sichtbaren Querarm 19 ermöglicht das Gelenk 22 (Fig.2) oder ein zusätzliches Sonderlager die Rotation des Solargenerators 20, insbesondere in windstillen oder windarmen kalten Höheneinsatzzonen, um die Konvektionskühlung des Solargenerators zu erhöhen und dadurch die Arbeitstemperatur der Solarzellen auch bei Konzentratornutzung möglichst niedrig, d.h. den Solarzellenwirkungsgrad möglichst hoch zu halten.

Insbesondere bei größeren Anlagen können unter Berücksichtigung des derzeitigen und weiteren Fortschritts in der Supraleitfähigkeitstechnik solche Anwendungen genutzt werden. So können beispielsweise die oben genannten Rotations-Sonderlager als quasi verlustlose magnetische Lager ausgeführt werden.

In Fig. 4 ist der Grundriß eines besonders einfachen aus der Vielzahl der in Betracht kommenden Schienensystemen für die Tages-Sonnennachführung gezeigt; dieses System faßt eine Mehrzahl Einzelsolarstationen als Solarfarm zusammen. Die Kombination einer langen Nord-Süd-Schiene 24 mit je einer Ost-West-Schiene 25 pro Solarstation kann eine Minimierung des Gesamtschienenaufwandes bewirken. Im dargestellten Beispiel ist das Schienensystem für drei Stationen mit je zwei Bodenabspannungen und ihren zwei an den Schienen entlang fahrbaren Seilwinden 26 und 27 vorgesehen. Aus der in Fig. 4 dargestellten Frühmorgens-Stellung werden im Laufe des Vormittags die Seilwinden 26, vorzugsweise automatisch, bis zu den Ost-West-Schienenendpunkten 28 gefahren. Die fahrbaren Seilwinden 27 auf der Nord-Süd-Schiene folgen entsprechend dem Tages-Sonnenlauf nach Süden bis zum Sonnenhöchststand in der Linie der Schienen 25 und dann weiter bis zum Sonnenuntergang, wobei die Seilwinden 26 wieder synchron auf ihren Schienen nach Osten gefahren werden.

Je nach geografischer Breite kann es rentabel sein, die Schienen 25 über eine Kreuzung mit der Nord-Süd-Schiene 24 hinaus nach Osten zu verlängern, um im Sommer bei einer Tages-Sonnenscheindauer von über 12 Stunden die Solargeneratoren auch früh und spät senkrecht zur Sonnen-Himmelsrichtung fahren zu können. Das gilt insbesondere bei mittleren und hoheren Konzentrator-Nutzungen zur Solarzellen-Kosteneinsparung. Außerdem ist dann zur synchronen Sonnennachführung im Tagesverlauf in den Solarstationen selbst nur eine Achse der Solargeneratoren zu bewegen.

Die Schienen 24 und 25 weisen geeignete, für sich bekannte Profile entsprechend der zu berechnenden Zugkraftaufnahme der Seilfesselungen. Sie können je nach Anlagengröße zweispurig sein und über Zuganker bodenverankert werden. Über Wasseroberflächen, wie Flüssen, Seen oder Offshore- Gebieten, sowie teils in Gebirgen werden Einzel-Ständeranordnungen in optimierten Abständen bevorzugt, aber es sind ggf. auch Schwimmkörpernutzungen möglich.

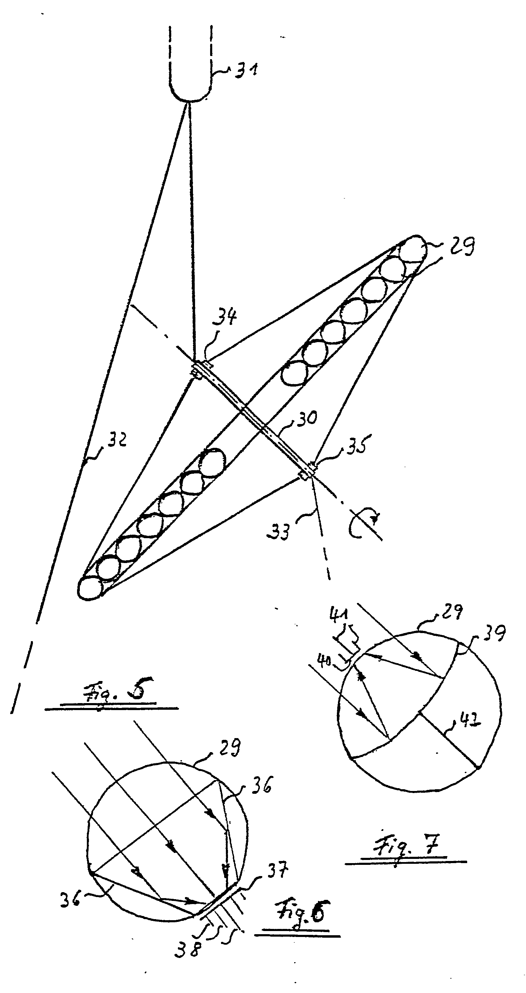

In Fig. 5 ist eine Solarstation in Scheibenform für kleinere und mittlere Leistungen im Querschnitt dargestellt. Mit Traggas gefüllte zylindrische Hohlring-Auftriebskörper 29, vorzugsweise aus leichten sowie weitestgehend Traggasdichten Spezialfolien oder Folienkombinationen, sind, beispielsweise durch Verseilung, zu einer Torus-Scheibenform gebündelt und entsprechend verseilt oder mittels Spezialfelge in Leichtbauweise einer Zentralachse 30 zugeordnet.

Je nach Dimensionierung tragen zusätzliche Auftriebskörper 31 zur Erhöhung der Gesamttragkraft und zur Gesamtstabilisierung in der gewählten Arbeitshöhe bei. Hier bewirken Abspannungen 32 und 33 die Erdfesselung über fahrbare Seilwinden, wie zuvor in Fig. 1 und/oder 4 dargestellt. Die Ausrichtung der Torus-Scheibenebene senkrecht zur Tagessonnenrichtung erfolgt über entsprechende Verkürzung bzw. Verlängerung der Seile 32 und/oder 33 mittels der Seilwinden.

Achsen-Tragelemente 34 und 35 sind mit Lagern ausgebildet, um eine Rotation der die Solargeneratoren tragenden Torusscheibe zwecks Zusatzkonvektionskühlung zu ermöglichen.

Aus fertigungstechnischen Gründen kommen auch andere Scheibenstationsformen in Betracht, beispielsweise eine Mehr-oder Vieleckform statt der einzelnen zylindrischen Kreishohlringformen.

Zur Erhöhung der Gesamtstabilität der scheibenförmigen Solarstation ist es zeckmäßig, zumindest am unteren Ende der Hauptachse 30 einen horizontalen leichten Querträger vorzusehen, dessen Länge über den Durchmesser des äußeren größten der Toruskörper 29 hinausgeht. Weitere einzelne Auftriebskörper 31 an den Enden dieses Querträgers oder - bei noch größeren Anlagen - Auftriebscluster 15 nach Fig. 2 an den vier Enden von je zwei Querträgern an den Enden der Hauptachse 30 sorgen auch bei stärkeren Höhenwinden für einen sicheren stabilen Anlagenbetrieb. Die Bodenfesselung erfolgt dann ebenfalls an Enden der Querträger.

Als Dimensionierungsvergleich möge die Pellworm-Anlage mit über 3 000 m² hagelfester Solarzellenfläche und ca. 380 000 kWh/a angeführt werden. Für die gleichhohe Jahresenergie reicht eine Torusscheibe gemäß Fig. 5 von ca. 25 bis maximal 30 m Durchmesser aus. Bei Konzentrator-Anwendung kann die notwendige Solarzellenfläche auf etwa 150 m², d.h. 1/20 reduziert werden. Außerdem ist dabei die Tagesenergiemenge für jeden Kalendertag und jede Stunde genau definiert. Das bedeutet zugleich, daß die Energiespeicherbatterie wesentlich kleiner und preiswerter wird und sogar noch eine höhere Lebensdauer als derzeit mit 3 bis 5 Jahren erhält. Der jetzige Pellworm-kWh-Preis von 3 bis 4 DM/kWh wäre also ganz wesentlich zu senken, insbesondere bei Serienfertigung und noch mehr mit der Annahme eines installierten Spiegel- und/oder Lasersatelliten-Systems. Natürlich müssen die Bedingungen der Standortwahl primär erfüllt sein, aber man sieht an diesem Vergleich, was vor allem bei Farm-Anlagen bereits jetzt erreichbar ist, wobei auch der Solarzellenwirkungsgrad noch steigerungsfähig ist. Außerdem zeigt der Pellworm-Vergleich, daß die Einzelsolarstation nach Fig. 5 als Serieneinheit auch wesentlich größer dimensioniert werden kann, jedoch können auch solche Einheiten in kleinerer Form in Konstruktionen wie nach Fig. 2 genutzt werden.

In Fig. 6 ist der Querschnitt eines Hohlring-Tragkörpers 29 der Fig. 5 bei niedrig konzentrierenden Systemen dargestellt. Im Hohlring 29 - oder bei anderer Solarstationsausführung in einem Hohlzylinder - befinden sich zwei Spiegelflächen 36, die das Sonnenlicht durch den klarsichtigen, aber spektral optimal an die spektrale Empfindlichkeit der jeweiligen Solarzellen angepaßten Folienteil der Hülle 29 auf Solarzellen 37 oder Solarzellenmodule konzentrieren. Die Spiegelflächen befinden sich, gerade auch aus Lebensdauergründen innerhalb der Hülle 29 im Auftriebsgas, das nämlich gleichzeitig eine Lebensdauererhöhungsfunktion für die Qualität der Spiegeloberflächen hat. Die Solarzellen oder Solarzellenmodule 37 befinden sich außerhalb der Hülle 29 im sehr kalten Höhenluftbereich und sind mit Wärmeleitvorrichtungen 38 ausgerüstet, so daß ihre Arbeitstemperatur durch Wärmeabstrahlung, natürliche Konvektion, vor allem in stetigen Höhenwindzonen, und/oder durch künstliche Konvektion bei Rotation der Gesamtscheibenanordnung nach Fig. 5 möglichst niedrig gehalten wird.

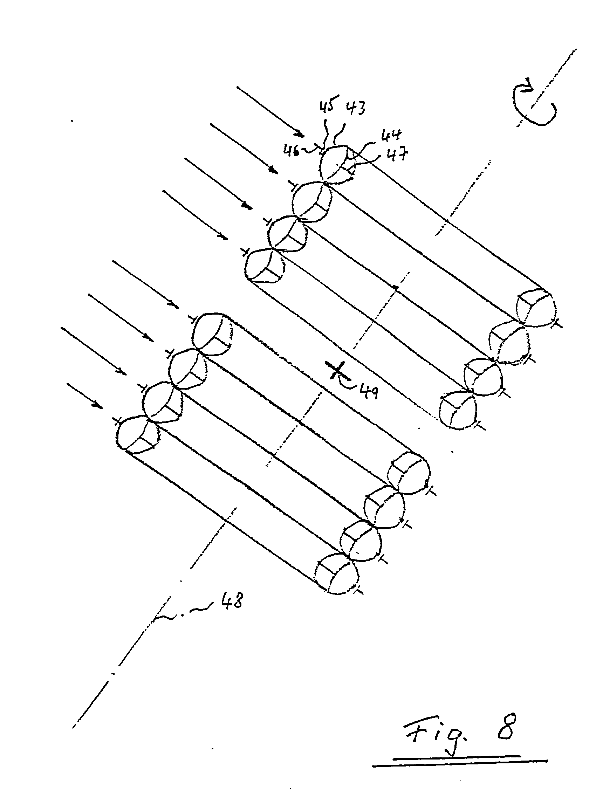

In Fig. 7 ist der Querschnitt eines Hohlzylinders oder hier die spezielle Form eines zylindrischen Hohlringkörpers 29 entsprechend Fig. 5 für Systeme mit mittlerer bis höherer Konzentration dargestellt. Konzentrationsfaktoren bis zu 20 oder sogar darüber sind hier realisierbar. Die entsprechende Anlagenoptimierung richtet sich u.a. weitgehend nach den verwendeten Solarzellen-Typen wie Silizium, GaAs, und zwar kristallin oder amorph, oder die "Hetzel-Zelle" als MIS-Inversionsschicht-Solarzelle.

Das Sonnenlicht tritt hier wiederum durch einen optimal spektral-transparenten Teil der Hülle 29, wird an einer verspiegelten Teilungsfolie 39 reflektiert und gebündelt auf Solarzellen 40 geworfen. Diese Solarzellen oder Solarzellen-Module 40 sind analog zu Fig. 6 ebenfalls mit Wärmeableitvorrichtungen 41 versehen, wobei der Wärmetransport durch Wärmerohre wesentlich unterstützt werden kann. Dadurch sind auch bei zunehmenden Konzentrationsfaktoren, vor allem mit Rotation der Gesamtscheibenanordnung nach Fig. 5, günstige niedrige Zellenarbeitstemperaturen zu erreichen.

Die optimale optische Flächenkrümmung der verspiegelten Teilungsfolie 39, gegebenenfalls unterstützt durch "Memory"-Metallstreifen, für die Sonnenstrahlungskonzentration kann durch einen geringen Überdruck des Traggases im oberen Teilbereich der Gesamthülle 29 gegenüber dem Gasdruck im Teilraum hinter der verspiegelten Teilungsfolie zusätzlich stabilisiert werden. Durch weitere Teilungsfolien, wie hier mit 42 angedeutet, und/oder weitere Kammerunterteilungen kann die langlebige Betriebssicherheit der Anlagen gesteigert werden. Bei unvermeidbaren geringen Traggasverlusten wird, wie schon beschrieben, beispielsweise kontinuierlich oder in Schritten nachgeregelt.

In Fig.8 ist eine Solarstation als Torusaggregat für größere elektrische Leistungen im Querschnitt dargestellt. Die Bauteile 43 bis 47 entsprechen denen in Fig. 7. Die Grundfunktionen sind die gleichen, wie zu Fig. 5 bis 7 beschrieben.

In windstillen Arbeitshöhenregionen liegt eine Hauptachse 48 der Solarstation aus einem Torus oder auch einer größeren Anzahl von Toruseinheiten das ganze Jahr hindurch konstant in Nord-Süd-Richtung, während die Hauptachsenneigung im Laufe der Jahreszeiten kontinuierlich vom Boden aus so nachgeführt wird, daß die Ebene senkrecht zur Hauptachse mit der jeweiligen scheinbaren Tagessonnenbahnebene genau zusammenfällt. Bei Störeinflüssen, wie zum Beispiel Höhenwindänderungen, muß natürlich auch die Nord-Süd-Hauptachsenrichtung von der Erde aus fahrbar nachreguliert werden. Hier nicht dargestellte Höhen- und/oder Seitenruder können die Feinregulierung bewirken und/oder unterstützen. Die Höhen- und Seitenruder können gleichzeitig als Zusatzauftriebskörper ausgebildet sein.

Die Konstanz der Hauptachsenneigung während eines ganzen Sonnentages kann auch durch verschiebbare Tariermassen auf der Hauptachse 48 feinreguliert werden, vor allem auch zur Schwingungsdämpfung bei starken Windstößen in der Troposphäre.

Auch bei dieser Ausführung einer Solarstation dienen ein oder mehrere horizontale Leichtbau-Trägerarme 49 zur Abspannung der Station an der Erdoberfläche analog Fig. 5 und/oder zur Aufbringung zusätzlicher Auftriebskräfte mittels einzelner oder zu Gruppen zusammengefaßter Auftriebskörper analog der Körper 15 (Fig. 2) oder 31 (Fig. 5).

Bei nicht um die Hauptachse 48 rotierenden Toruseinheiten 43 wird vom Sonnenaufgang bis zum Sonnenuntergang eines Tages immer nur ein Teil der Solargeneratoren 45 von der Sonne bestrahlt und genutzt. Es sind aber keine tageszeitlichen Sonnennachführungen bis auf seltene Feinregulierungen vom Erdboden aus erforderlich.

Bei um die Hauptachse 48 rotierenden Toruseinheiten 43 und auf der Hauptachse 48 horizontal oder auch vertikal drehgelagerten Querträgerarmen 49, ergibt sich ein besonders stabilisiertes Gesamtaggregat. Die einzelnen Solargenerator-Module 45 auf dem Gesamtumfang der Hohlringtragkörper 43 werden zyklisch je Rotationsphase genutzt, analog den Solarzellenflächen auf der Oberfläche von spinstabilisierten Satelliten, und in ihren jeweiligen Schattenphasen nicht weiter erwärmt. Praktisch stellt sich so bei der Rotation eine günstige niedrige Mittel-Arbeitstemperatur ein, besonders unterstützt durch Wärmeableitvorrichtungen 46 und Kaltluftkonvektionskühlung, wie im Zusammenhang mit Fig. 5 bis 7 beschrieben.

Aufgrund aller dieser Maßnahmen kann der Konzentrationsfaktor relativ hoch gewählt werden und die notwendige Solargeneratorfläche für eine gewünschte Solarstationsleistung und/oder insbesondere eine gewählte Jahresenergiemenge so niedrig gehalten werden, daß über die derzeitigen Sonderfälle irdischer Solarkraftwerke bzw. - Stationen hinaus trotz hoher Solargeneratorpreise weltweit bereits heute echte Konkurrenzsituationen bestehen. Das gilt für weite Leistungsbereiche und/oder Jahresenergiemengen bei Farmanlagen bis in den KKW-Bereich und darüber hinaus bei bereits heute garantierten irdischen Anlagen von 20 Jahren Lebensdauer für Solargenerator-Module.

Dabei sind die in den skizzierten Darstellungen Fig. 1 bis 8 gezeigten Typen von Solarstationen nur einige wenige aus der Vielfalt der Möglichkeiten je nach weltweit speziellem Einsatzort und dessen individuellen Bedingungen.

Für eine Reihe von geografischen Gebieten hoher Jahressonnenstunden, insbesondere also den ca. 10 ausgewählten Dahlberg-Regionen, aber auch darüber hinaus, bietet sich auch an, die gesamten Vorteile einschließlich der Tieftemperatur-Umgebung auftriebsgetragener Solarstationen beispielsweise nach Fig. 8 mit der zusätzlichen Sonnenlichtbeaufschlagung durch entsprechend nachführbare Sonnenspiegelsysteme auf der Erdoberfläche analog den Spiegeln der Turmanlagen wie in Südspanien etc. zu kombinieren.

Die besonderen Vorteile der von der Erfindung vorgeschlagenen Solarstationstypen können aber durch die Nachtmitnutzung noch um ein Mehrfaches vergrößert werden, wenn der Einsatz von Spiegel- und/oder Laser-Satelliten forciert wird. Dann entfällt auch die bisherige Beschränkung auf nur wenige äquatornahe Zonen für Erdoberflächen-Anlagen zur zukünftigen Solarwasserstoff-Wirtschaft vollständig.

Bei zunehmenden $CO_2$- und eventuellen KKW-Problemen können auch Schutzmaßnahmen für nicht optimale geografische Orte bezüglich der Troposphäre wie Mindestabstand von bewohnten Gebieten, Sturm- und/oder Gewitterhäufigkeit, Sonderflugverbotszonen od.dgl. getroffen werden.

Ein Sonderbeispiel, auch bereits ohne Raumfahrt-Mitwirkung, wäre eine Solarstationsfarm von vielen GW in der südlichsten Hemisphäre, speziell in etwa 2 bis 4 km Höhe über dem Mount Vinsen (6100 km Höhe) in der Antarktis, mit fast halbjährigem 24-Stunden-Betrieb zur Wasserstoffgewinnung als Beitrag für die erhöhte Energieversorgung im nördlichen Winterhalbjahr für die dortigen Industrienationen.

Die erzeugte Gleichstromenergie wird über supraleitfähige Kabel in ein geeignetes nahes Küstengebiet geleitet und auf ausgedienten umgebauten Großtankern für die Elektrolyse benutzt.

So können sogar große Teilkomplexe der Gesamt-Anlagen im südlichen Winter an anderen geografischen Orten, insbesondere im sommerlichen Bereich nördlich des nördlichen Polarkreises wie beispielsweise Grönland, wiederum in fast halbjährigem, beinahe kontinuierlichem 24 h-Betrieb genutzt werden.

Weiterhin ist selbst bei erfolgreichem Vorantreiben der allgemeinen Raumfahrtanstrengungen, die Kombination der von der Erfindung vorgeschlagenen auftriebsgetragenen Solarstationen mit Spiegel- und/oder Laser- und/oder Energie-Relais-Satelliten mittel- und langfristig vorzuziehen, zumindest aber in jene Planungen mit einzubeziehen. Denn erstens nimmt der Anteil der Elektroenergie am Gesamtprimärenergiebedarf der Menschheit laufend zu und der Umweg über den Wasserstoff kann für diesen Energieanteil entfallen. Zweitens ist dadurch die komplizierende internationale Verflechtung für eine preiswerte Energieversorgung der Zukunft geringer zu halten.

Die von der Erfindung vorgeschlagenen Maßnahmen erfordern ein klares Mehrstufenprogramm in vernünftigen aufeinander abgestimmten Teilschritten zu zukünftigen optimalen Energie-Mix-Systemen, jedoch kommen insbesondere Klein- und Kleinst-Anlagen, vor allem auch als leicht transportfähige Einheiten für diverse Zwecke wie z.B. Katastrophen- und andere Sonder-Einsätze wegen der definierten Tages-Energiemenge schnellstens weltweit in Betracht.

## Ansprüche

1. Verfahren zum Einfangen und Umwandeln von Sonnenenergie in großen Höhen, insbesondere im Bereich der Tropopause, mit Hilfe mindestens einer Solarstation in Form eines zur Erdoberfläche abgespannten Systems einer Mehrzahl von Auftriebskörpern sowie mindestens einem von diesen getragenen Solargenerator, speziell einem solchen mit fotovoltaischen Zellen, **dadurch gekennzeichnet**, daß der/die Solargenerator/en über mindestens zwei das System mit der Erdoberfläche verbindende Abspannungen von der Erdoberfläche aus im wesentlichen senkrecht zum Einfall der Sonnenstrahlung ausgerichtet und von der Erdoberfläche aus durch Bewegen des Systems dem Sonnenstand über diese Abspannungen nachgeführt wird/werden.

2. Verfahren nach Anspruch 1, **dadurch gekennzeichnet**, daß die Nachführung um eine Zenitachse erfolgt.

3. Verfahren nach Anspruch 1 oder 2, **dadurch gekennzeichnet**, daß die Nachführung zwischen Sonnenaufgang und Sonnenuntergang erfolgt.

4. Verfahren nach einem der Ansprüche 1 bis 3, **dadurch gekennzeichnet**, daß die Solargeneratoren mittels Zwangskonvektion, vorzugsweise durch Rotation mindestens eines Systemteils, gekühlt werden.

5. Verfahren nach einem der Ansprüche 1 bis 4, **dadurch gekennzeichnet**, daß die Sonnenstrahlung gesammelt und auf wenigstens einen Teil der fotovoltaischen Zellen geworfen wird.

6. Verfahren nach einem der Ansprüche 1 bis 5, **dadurch gekennzeichnet**, daß die von der Solarstation erzeugte elektrische Energie mittels supraleitfähigem Kabel zur Erdoberfläche, zu einer Höhenzwischenstation und/oder von dieser zur Erdoberfläche übertragen wird.

7. Verfahren nach einem der Ansprüche 1 bis 6, **dadurch gekennzeichnet**, daß dem Traggas Mittel zur Selbstheilung gegenüber auftretenden kleineren Undichtigkeiten beigegeben werden.

8. Verfahren nach einem der Ansprüche 1 bis 7, **dadurch gekennzeichnet**, daß von der Solarstation über mindestens einen zusätzlichen Spiegel Sonnenenergie zur Erhöhung der Intensität auf zugeordnete Sonnenstrahlungs-Energie-Wandler wie fotovoltaische und/oder thermische Erdoberflächen-Solaranlagen reflektiert wird.

9. Verfahren nach einem der Ansprüche 1 bis 8, **dadurch gekennzeichnet**, daß der Solarstation von mindestens einem Spiegel- und/oder Laser-Satelliten Solarenergie oder Strahlungsenergie zugeführt wird.

10. Anlage zum Einfangen und Umwandeln von Sonnenenergie in großen Höhen, insbesondere im Bereich der Tropopause, mit Hilfe mindestens einer Solarstation in Form eines zur Erdoberfläche abgespannten Systems einer Mehrzahl von Auftriebskörpern (1) sowie mindestens einem von diesen getragenen Solargenerator (4), speziell einem solchen mit fotovoltaischen Zellen, **dadurch gekennzeichnet**, daß das System eine Mehrzahl von modulartig aufgebauten oder zu Modulgruppen zusammengefügten Solargeneratoren (4) umfaßt, die an mindestens zwei Auftriebskörpern/Auftriebskörpergruppen (1, 15) eines gegenüber den Verhältnissen mindestens bis zur Tropopause widerstandsfähigen Aufbaus befestigt sind, und daß das Solargeneratoren-Auftriebskörper-System über mehrere Abspannungen (8, 9, 10) jeweils einzeln mit Lagerpunkten (12, 13) im Bereich der Erdoberfläche verbunden ist, wobei mindestens ein Lagerpunkt (12, 13) der Abspannungen relativ zur Erdoberfläche entsprechend dem Sonnenstand geführt bewegbar angeordnet ist.

11. Anlage nach Anspruch 10, **dadurch gekennzeichnet**, daß die Lagerpunkte (12, 13) der Abspannungen an Trägern sitzen, die an bogen- oder kreisförmigen bodenverankerten Führungen (14) gelagert sind und Seilwinden oder Seilhalterungen (12, 13) umfassen, die kontinuierlich oder in Schritten - vorzugsweise automatisch - entlang den Führungen bewegbar sind.

12. Anlage nach Anspruch 10, **dadurch gekennzeichnet**, daß eine Abspannung ortsfest verankert und weitere Abspannungen je nach Sonnenstand an einer oder mehreren Parallelführungen, insbesondere -schienen, relativ zu wenigstens einem festen Abspannungspunkt automatisch nachführbar sind.

13. Anlage nach einem der Ansprüche 10 bis 12, **dadurch gekennzeichnet**, daß die Auftriebskörper (1) oder Auftriebskörpergruppen (15) (Auftriebscluster) mehretagig angeordnet sind.

14. Anlage nach einem der Ansprüche 10 bis 13, **da durch gekennzeichnet**, daß die Tragkörper eine Form günstigen Luftwiderstandsbeiwerts haben, wobei sie als Hohlzylinder (1), Hohlring (29), Hohldiskus, Hohlscheibe, Hohlspeichenrad od.dgl. ausgebildet sind.

15. Anlage nach einem der Ansprüche 10 bis 14, **dadurch gekennzeichnet**, daß mindestens an einer Seite der Solargeneratoren (37) Spiegelflächen (36) angeordnet sind.

16. Anlage nach einem der Ansprüche 10 bis 15, **dadurch gekennzeichnet,** daß die Auftriebskörper-Hüllen (29) mindestens teilweise mit Bereichen aus spektral optimierten hochtransparentem und/oder thermisch optimierten Material ausgebildet sind.

17. Anlage nach Anspruch 16, **dadurch gekennzeichnet,** daß im Inneren der Auftriebskörper-Hüllen (29) Spiegelflächen (36, 39) angeordnet sind.

18. Anlage nach Anspruch 17, **dadurch gekennzeichnet,** daß die Spiegelflächen im Inneren der Auftriebskörperhüllen direkt auf Hüllenteile (39) aufgebracht sind.

19. Anlage nach einem der Ansprüche 10 bis 18, **dadurch gekennzeichnet,** daß die Solargeneratoren (37, 40) und/oder Solarzellen einzeln oder in Gruppen zur Konvektions- und/oder Kaltwindkühlung od.dgl. angeordnet sind, wobei sie vorzugsweise um eine zentrale Achse (30, 48) rotierbar vorgesehen und/oder mit Kühleinrichtungen wie Wärmerohren, Wärmeleiteinrichtungen (38, 41, 46) od.dgl. ausgebildet sind.

20. Anlage nach einem der Ansprüche 10 bis 19, **dadurch gekennzeichnet,** daß mindestens ein Teil der Auftriebskörper (29) zu einem scheibenähnlichen Gebilde mit einer definierten Hauptachse (30) gebündelt ist, die auf die Sonne gerichtet und dieser nachführbar ist.

21. Anlage nach Anspruch 20, **dadurch gekennzeichnet,** daß die Module oder Modulgruppen der ggf. mit Spiegeln (36) oder Konzentratoren (39) ausgerüsteten Solargeneratoren (37, 40) auf einer Seite des scheibenförmigen Gebildes angeordnet sind.

22. Anlage nach einem der Ansprüche 10 bis 21, **dadurch gekennzeichnet,** daß mindestens ein Teil der Auftriebskörper aus einem oder mehreren Auftriebsgas-gefüllten Hohlringkörpern (Torus) (43) mit definierter Hauptachse (48) besteht, wobei die davon getragenen Solargeneratoren (45) im Bereich des Umfangs der Hohlringkörperanordnung befestigt sind.

23. Anlage nach Anspruch 22, **dadurch gekennzeichnet,** daß die Hauptachse (48) des Torus jahreszeitlich gemäß Mittags-Zenitwinkel senkrecht zur Ebene des Tagessonnenlaufes nachführbar ist.

24. Anlage nach einem der Ansprüche 22 und 23, **dadurch gekennzeichnet,** daß eine als Sammelspiegel ausgebildete Teilungsfolie (44) und/oder -fläche im Hohlring des Torus als Konzentrator angeordnet ist.

25. Anlage nach einem der Ansprüche 22 bis 24, **dadurch gekennzeichnet,** daß die am Umfang des Torus befindlichen Solargeneratoren (45) über einen optimal spektraltransparent ausgebildeten Teil der äußeren Torushülle (43) hindurch mit einem Mehr- bis Vielfachen der Solarkonstanten beaufschlagbar sind.

26. Anlage nach einem der Ansprüche 22 bis 25, **dadurch gekennzeichnet,** daß der/die Hohlringkörper (43) um seine/ihre Zentralachse (48) rotierbar ist/sind.

27. Anlage nach einem der Ansprüche 20 bis 26, **dadurch gekennzeichnet,** daß die Hauptachse (48) ein oder mehrere sich senkrecht dazu erstreckende, drehgelagerte Arme (49) aufweist, wobei die Abspannungen (8, 9, 10) etwa an den Enden der Arme vorgesehen ist sowie eventuelle Zusatztragkörper dort gehalten sind.

28. Anlage nach einem der Ansprüche 10 bis 27, **dadurch gekennzeichnet,** daß sie mit einem oder mehreren insbesondere supraleitfähigen Energiespeichern ausgerüstet ist.

_Fig. 1_

Fig. 2

Fig. 3

_Fig. 4_

_Fig. 5_

_Fig. 6_

_Fig. 7_

Fig. 8

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| A | US-A-4 364 532 (STARK) <br> * Spalte 5, Zeilen 36-56; Spalte 7, Zeilen 18-24; Spalte 9, Zeilen 31-37 * <br> --- | 1-5 | B 64 B 1/00 <br> B 64 B 1/40 <br> H 01 L 31/04 |
| A | DE-A-3 049 331 (WENZEL) <br> * Insgesamt * <br> --- | 1,10 | |
| A | DE-A-2 754 114 (HILLE) <br> * Insgesamt * <br> --- | 1 | |
| A | DE-A-3 207 379 (MUMMERT) <br> * Insgesamt * <br> --- | 1 | |
| A | WO-A-8 002 680 (BISCOMB) <br> * Seite 6, Zeile 2 - Seite 7, Zeile 30 * <br> ----- | 1,10-14 | |

RECHERCHIERTE SACHGEBIETE (Int. Cl.4)

B 64 B
B 64 G
H 01 L

Der vorliegende Recherchenbericht wurde für alle Patentansprüche erstellt

| Recherchenort | Abschlußdatum der Recherche | Prüfer |
|---|---|---|
| DEN HAAG | 12-01-1989 | HAUGLUSTAINE H.P.M. |